# EUROPEAN PATENT SPECIFICATION

(11) **EP 2 660 377 B1**
(45) Date of publication and mention of the grant of the patent: **09.04.2014**
(21) Application number: 12166561.6
(22) Date of filing: 03.05.2012
(51) Int. Cl.: D04H 3/02, D04H 3/08, D04H 3/14, D04H 3/16, D04H 1/44, D04H 1/54, D21F 1/00

(54) **Method of making a double-sided embossed non-woven fabric**
Verfahren zur Herstellung eines doppelseitig geprägten Vliesstoffs
Procédé de fabrication d'un tissu non tissée gaufrée double face

(43) Date of publication of application: 06.11.2013
(73) Proprietor: Huang, Chen-Cheng, Taipei City 105 (TW)
(72) Inventor: Huang, Chen-Cheng, Taipei City 105 (TW)
(74) Representative: Schwerbrock, Florian

(56) References cited:
- EP-A1- 1 217 107
- EP-A1- 1 228 798
- EP-A1- 1 430 861
- EP-A2- 1 455 080
- WO-A1-99/44809
- WO-A1-2005/013873
- TW-A- 200 806 456
- US-A- 3 322 617

## Description

### BACKGROUND OF THE INVENTION

### 1. Field of the invention

This invention relates to a method of making a double-sided embossed non-woven fabric, more particularly to a method involving suctioning a stack of semi-molten fibers on a screen assembly to form a double-sided embossed non-woven fabric.

### 2. Description of the related art

EP 1217107 describes the electro-spinning of starch filaments to make a patterned web.

U.S. Patent No. 5, 555, 801 discloses a method of making a double-sided embossed fibrous web. The method is capable of overcoming a tendency of undesirably breaking or rupturing the fibrous web during embossing by using conventional embossing rollers. The method of the patent includes passing a fibrous web through a nip between a pressure roller and an embossing roller. The pressure roller has a smooth and hard surface so as to create the effect of a double sided three dimensional embossing on the fibrous web. However, the method is disadvantageous in that the material of the embossed regions of the embossed fibrous web that are brought into contact with the pressure and embossing rollers is undesirably hardened and shrunk due to melting, pressurizing and cooling of the material in the embossing process. In addition, the thickness of the embossed regions tends to become thinner as compared to that of the non-embossed regions of the embossed fibrous web.

### SUMMARY OF THE INVENTION

Therefore, the object of the present invention is to provide a method of making a double-sided embossed non-woven fabric that can overcome the aforementioned drawbacks associated with the prior art.

According to the present invention, there is provided a method of making a double-sided embossed non-woven fabric according to claim 1. The method comprises: melting resin pellets to form a melt, followed by feeding the melt through a fiber-forming device to form the semi-molten fibers and subsequently discharging the semi-molten fibers from the fiber-forming device onto the screen assembly; forming a stack of semi-molten fibers on a screen assembly on a suctioning device, the screen assembly including a first layer structure that has a plurality of suction holes arranged into a first pattern, and a second layer structure that is disposed on the first layer structure and that has a plurality of elements arranged into a second pattern; and embossing the stack of the semi-molten fibers on the screen assembly by suctioning the stack of the semi-molten fibers using the suctioning device such that the stack of the semi-molten fibers is drawn into the holes to wrap the elements, thereby forming the stack of the semi-molten fibers into a non-woven fabric with a raised pattern corresponding to the second pattern of the screen assembly and a recess pattern corresponding to the first pattern of the screen assembly.

### BRIEF DESCRIPTION OF THE DRAWINGS

In drawings which illustrate embodiments of the invention,
Fig. 1 is a schematic sectional view illustrating an apparatus employed in the first preferred embodiment of a method of making a double-sided embossed non-woven fabric according to the present invention;
Fig. 2 is a fragmentary sectional view of a screen assembly used in the first preferred embodiment;
Fig. 3 is a fragmentary perspective view of the screen assembly used in the first preferred embodiment;
Fig. 4 is a fragmentary perspective view of a modified screen assembly modified from that of the first preferred embodiment;
Fig. 5 is a sectional view of amodifiedsuctioning device modified from that of the first preferred embodiment;
Fig. 6 is a schematic sectional view illustrating an apparatus employed in the second preferred embodiment of a method of making a double-sided embossed non-woven fabric according to the present invention; and
Fig. 7 is a schematic sectional view illustrating an apparatus employed in a method of making a fabric web containing a double-sided embossed non-woven fabric according to the present invention.

### DETAILED DESCRIPTION OF THE PREFERRED EMBODIMENTS

Before the present invention is described in greater detail with reference to the accompanying preferred embodiments, it should be noted herein that like elements are denoted by the same reference numerals throughout the disclosure.

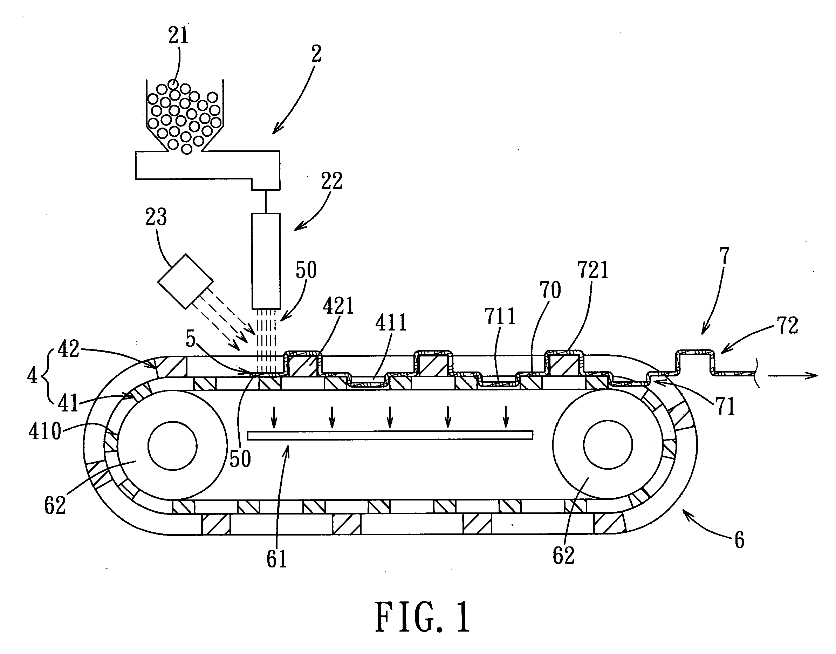

Figs. 1 to 3 illustrate an apparatus employed in the first preferred embodiment of a method of making a double-sided embossed non-woven fabric according to the present invention. The double-sided embossed non-woven fabric can be used as an air permeable substrate of an article, such as a diaper, a filtering medium, a surgical gown, or a hospital bedsheet.

The method includes the steps of: directly stacking semi-molten fibers 50 (the term"semi-molten" as used herein represents a state in which liquid and solid phases coexists) on a screen assembly 4 on a suctioning device 6 so as to form an air permeable stack 5 of the semi-molten fibers 50 on the screen assembly 4, the screen assembly 4 including a first layer structure 41 that has a screen wall body 410 and that has a plurality of suction holes 411 formed in the screen wall body 410 and arranged into a first pattern, and a second layer structure 42 that is disposed on the screen wall body 410 of the first layer structure 41 and that has a plurality of elements 421 arranged into a second pattern; and embossing the stack 5 of the semi-molten fibers 50 on the screen assembly 4 by suctioning the stack 5 of the semi-molten fibers 50 using the suctioning device 6 such that the stack 5 of the semi-molten fibers 50 is drawn into the holes 411 to wrap the elements 421 and an area of the screen wall body 410 which is not covered by the second layer structure 42, thereby forming the stack 5 of the semi-molten fibers 50 into a non-woven fabric 7 having a base portion 70 covering the area of the screen wall body 410, a first level 71 of recessed portions 711 extending downwardly from the base portion 70 and having a recess pattern corresponding to the first pattern, and a second level 72 of protuberant portions 721 extending upwardly from the base portion 70 and having a raised pattern corresponding to the second pattern. It is noted that fiber-to-fiber bonding among the semi-molten fibers 50 of the stack 5 occurs during the embossing step.

In this embodiment, the stack 5 of the semi-molten fibers 50 is formed by melting resin pellets using an extruder 2 to form a melt, followed by feeding the melt through a fiber-forming device 22 to form the semi-molten fibers 50 and subsequently and directly discharging the semi-molten fibers 50 from the fiber-forming device 22 onto the screen assembly 4.

In this embodiment, the fiber-forming device 22 is a spinnerette which is used for forming spunbound fibers. Alternatively, the fiber-forming device 22 can be a melt-blowing die which is used for forming meltblown fibers.

Preferably, the method of this invention further includes a step of heating the semi-molten fibers 50 using a heater 23 during discharging of the semi-molten fibers 50 from the fiber-forming device 22 onto the screen assembly 4 so as to control and maintain a desired melt viscosity of the semi-molten fibers 50 and to facilitate formation of the non-woven fabric 7 in the subsequent embossing process.

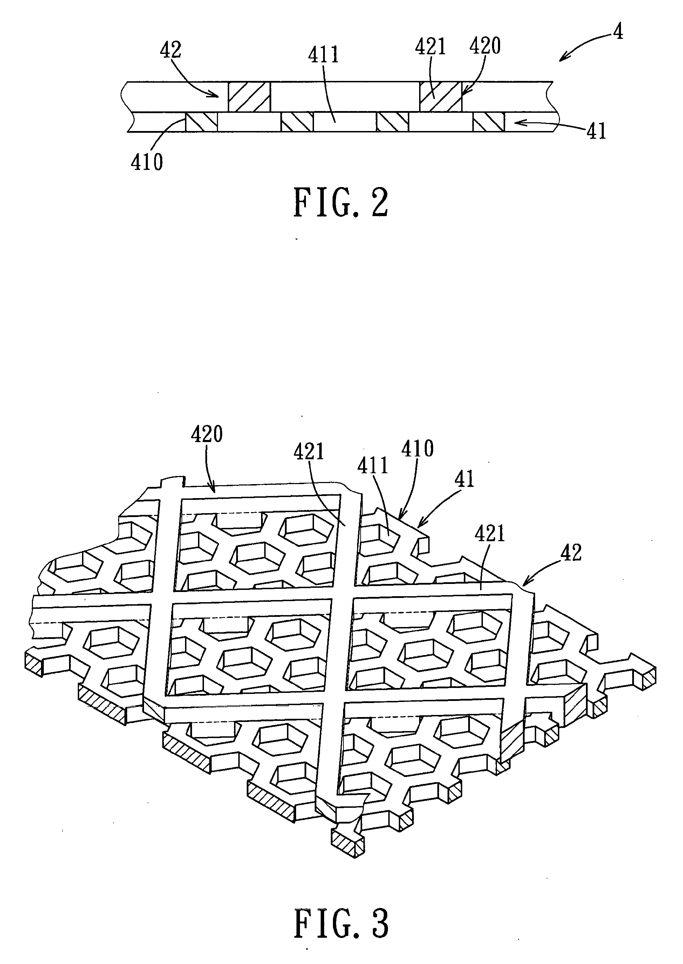

In this embodiment, the elements 421 are in the form of elongate ribs that are formed into a net body 420 (see Fig. 3).

In this embodiment, the suctioning device 6 is a conveyor-type suction device and includes a suction box 61 surrounded by the screen assembly 4. The screen wall body 410 serves as a conveyor belt trained on and driven by a pair of driving wheels 62.

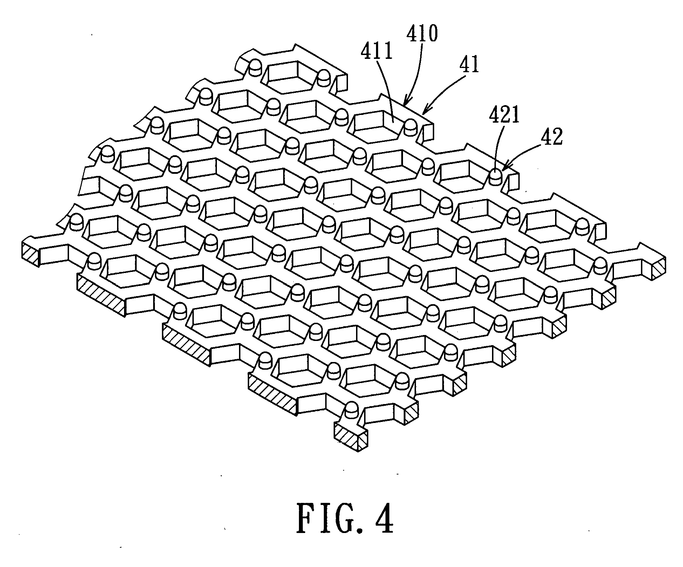

The screen assembly 4 can be modified into one having more layer structures (not shown) or having a structure shown in Fig. 4. The modified screen assembly 4 differs from the screen assembly of Fig. 3 in that the elements 421 of the second layer structure 42 of the modified screen assembly 4 are in the form of isolated protrusions disposed on the screen wall body 410.

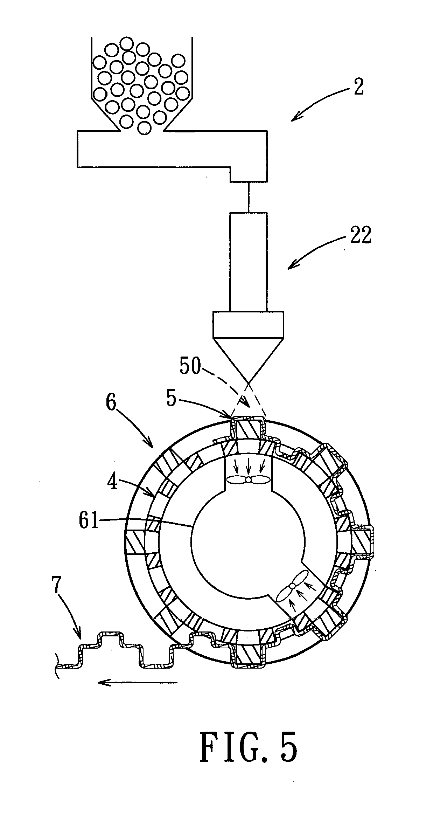

Alternatively, the suctioning device 6 can be a drum-type suction device (see Fig. 5), which includes a suction box 61 surrounded by the screen assembly 4 that is cylindrical in shape, and a central shaft (not shown) for mounting of the screen assembly 4.

In a modified embodiment, formation of the stack 5 of the semi-molten fibers 50 on the screen assembly 4 can be conducted by directly stacking non-molten fibers onto the screen assembly 4 to form a stack of the non-molten fibers, followed by passing the stack of the non-molten fibers through a heater or an oven (not shown) so as to form the non-molten fibers into the semi-molten fibers 50.

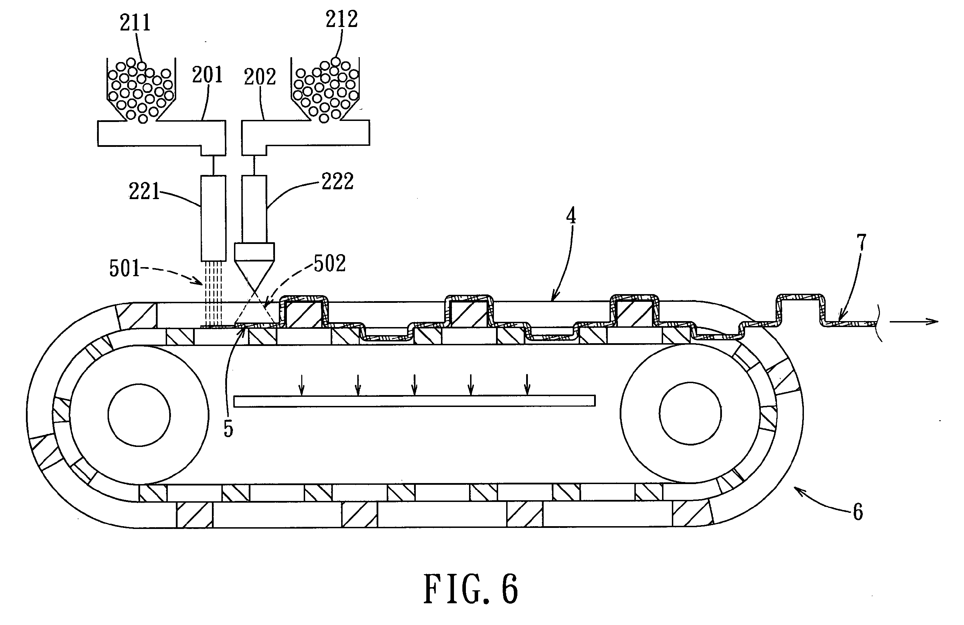

Fig. 6 illustrates an apparatus employed in the second preferred embodiment of a method of making a double-sided embossed non-woven fabric according to the present invention. The second preferred embodiment differs from the previous embodiment in that the stack 5 of the semi-molten fibers 50 includes a plurality of first semi-molten fibers 501 and a plurality of second semi-molten fibers 502, that the first semi-molten fibers 501 are formed by melting first resin pellets 211 using a first extruder 201 to form afirstmelt, followed by feeding the first melt through a spinnerette 221, and that the second semi-molten fibers 502 are formed by melting second resin pellets 212 using a second extruder 202 to form a second melt, followed by feeding the second melt through a melt-blowing die 222.

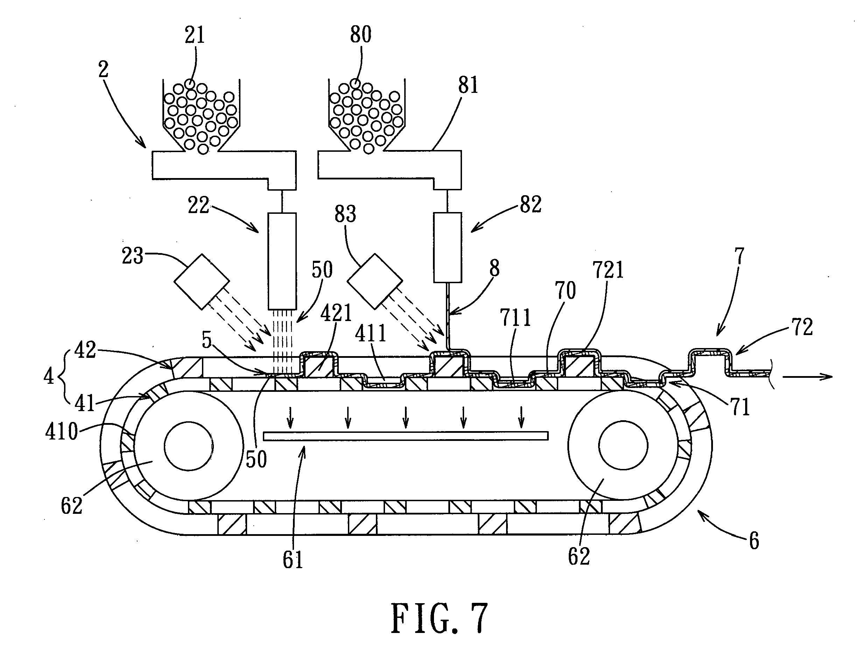

Fig. 7 illustrates an apparatus employed in a method of making a fabric web containing the double-sided embossed non-woven fabric according to the present invention. The method includes: forming the double-sided embossed non-woven fabric 7 according to the first preferred embodiment, extruding a plastic raw material 80 to form a plastic film 8 (which is in a semi-molten state) using an extruder 81 with an elongate extruding die 82, and subsequently casting the plastic film 8 to the double-sided embossed non-woven fabric 7 such that the plastic film 8 is bonded to the double-sided embossed non-woven fabric 7 and has patterns conforming to the raised pattern and the recess pattern of the double-sided embossed non-woven fabric 7, respectively. A heater 83 is used for controlling the semi-molten state of the plastic film 8 and for softening the double-sided embossed non-woven fabric 7 when necessary to facilitate bonding between the plastic film 8 and the double-sided embossed non-woven fabric 7. The plastic film 8 forms an air impermeable barrier for the fabric web thus formed.

By stacking the semi-molten fibers 50 on the screen assembly 4, followed by suctioning the stack 5 of the semi-molten fibers 50 in a manner to draw the stack 5 into the suction holes 411 according to the method of this invention, the aforesaid drawbacks associated with the prior art can be alleviated. In addition, the heating of the semi-molten fibers 50 during discharging thereof onto the screen assembly 4 to control the melt viscosity of the stack 5 can facilitate formation of the double-sided embossed non-woven fabric 7.

## Claims

1. A method of making a double-sided embossed non-woven fabric, comprising:
melting resin pellets (211,212) to form a melt, followed by feeding the melt through a fiber-forming device (22) to form the semi-molten fibers (50) and subsequently discharging the semi-molten fibers (50) from the fiber-forming device (22) onto the screen assembly (4);
forming a stack of semi-molten fibers (50) on a screen assembly (4) on a suctioning device (6), the screen assembly will including a first layer structure (41) that has a plurality of suction holes (411) arranged into a first pattern, and a second layer structure(42) that is disposed on the first layer structure(41) and that has a plurality of elements (421) arranged into a second pattern; and
embossing the stack of the semi-molten fibers (50) on the screen assembly (4) by suctioning the stack of the semi-molten fibers (50) using the suctioning device (6) suck that the stack of the semi-molten fibers (50) is drawn into the suction holes (411) to wrap the elements (421), thereby forming the stack of the semi-molten fibers (50) into a non-woven fabric (7) with a raised pattern corresponding to the second pattern of the screen assembly (4) and a recess pattern corresponding to the first pattern of the screen assembly(4).

2. The method of Claim 1, wherein formation of the stack of the semi-molten fibers (50) on the screen assembly (4) is conducted by directly stacking the semi-molten fibers (50) onto the screen assembly (4).

3. The method of Claim 1, wherein the first layer structure (41) has a screen wall body (410), the suction holes (411) being formed in the screen wall body (410), the elements (421) being in the form of isolated protrusions disposed on the screen wall body (410).

4. The method of Claim 1, wherein the first layer structure (41) has a screen wall body (410), the suction holes (411) being formed in the screen wall body (410), the elements (421) being in the form of elongate ribs that are formed into a net body (420).

5. The method of Claim 1, wherein the fiber-forming device (22) is a spinnerette (221).

6. The method of Claim 1, wherein the fiber-forming device(22) is a melt-blowing die (222).

7. The method of Claim 1, further comprising heating the semi-molten fibers (50) during discharging of the semi-molten fibers (50) from the fiber-forming device (22) onto the screen assembly (4) so as to control and maintain a desired melt viscosity of the semi-molten fibers (50).

8. The method of Claim 1, wherein the stack of the semi-molten fibers (50) includes a plurality of first semi-molten fibers (501) and a plurality of second semi-molten fibers (502), the first semi-molten fibers (501) being formed by melting first resin pellets (211) to form a first melt, followed by feeding the first melt through a spinnerette (221), the second semi-molten fibers (502) being formed by melting second resin pellets (212) to form a second melt, followed by feeding the second 5 melt through a melt-blowing die (222).

9. The method of Claim 1, further comprising a heater (23) for heating the semi-molten fibers (50).

## Patentansprüche

1. Verfahren zur Herstellung eines doppelseitigen, geprägten Textilverbundstoffs bestehend aus:
schmelzfähigen Pellets (211, 212) zur Bildung einer Schmelze, gefolgt von einer Zuführung der Schmelze zu einer faserformenden Vorrichtung (22) zur Herstellung von halbgeschmolzenen Fasern (50) und einem nachfolgenden Austritt der halbgeschmolzenen Fasern (50) aus der faserformenden Vorrichtung (22) auf ein Gitter (4);
Bildung eines Stapels von halbgeschmolzenen Fasern (50) auf einem Gitter (4) auf einer Ansaugvorrichtung (6), wobei das Gitter (4) einen ersten Schichtaufbau (41) mit mehreren Ansaugöffnungen (411), die in einem ersten Muster angeordnet sind, und einen zweiten Schichtaufbau (42), der auf dem ersten Schichtaufbau (41) angeordnet ist und der mehrere Elemente (421) aufweist, die in einem zweiten Muster angeordnet sind, umfasst und
Prägung des Stapels der halbgeschmolzenen Fasern (50) auf dem Gitter (4), indem der Stapel der halbgeschmolzenen Fasern (50) mit der Ansaugvorrichtung (6) so angesaugt wird, dass der Stapel der halbgeschmolzenen Fasern (50) so in die Saugöffnungen (411) gezogen wird, dass die Elemente (421) umschlossen werden, wodurch der Stapel der halbgeschmolzenen Fasern (50) zu einem Textilverbundstoff (7) mit einem erhabenen Muster entsprechend dem zweiten Muster des Gitters (4) und einem vertieften Muster entsprechend dem ersten Muster des Gitters (4) geformt wird.

2. Ein Verfahren nach Anspruch 1, wobei die Bildung des Stapels der halbgeschmolzenen Fasern (50) auf dem Gitter (4) dadurch erfolgt, dass die halbgeschmolzenen Fasern (50) direkt auf das Gitter (4) gestapelt werden.

3. Ein Verfahren nach Anspruch 1, wobei der erste Schichtaufbau (41) einen Gitterkörper (410) aufweist, die Ansaugöffnungen (411) im Gitterkörper (410) ausgebildet sind, die Elemente (421) in Form von getrennten Überständen auf dem Gitterkörper (410) ausgebildet sind.

4. Ein Verfahren nach Anspruch 1, wobei der erste Schichtaufbau (41) einen Gitterkörper (410) aufweist, die Ansaugöffnungen (411) im Gitterkörper (410) ausgebildet sind, die Elemente (421) in Form von länglichen Rippen als Netzkörper (420) ausgebildet sind.

5. Ein Verfahren nach Anspruch 1, wobei die faserbildende Vorrichtung (22) eine Spinndüse (221) ist.

6. Ein Verfahren nach Anspruch 1, wobei die faserbildende Vorrichtung (22) ein Schmelzblas-Formwerkzeug (222) ist.

7. Ein Verfahren nach Anspruch 1, ferner umfassend ein Erhitzen der halbgeschmolzenen Fasern (50) während des Austritts der halbgeschmolzenen Fasern (50) aus der faserbildenden Vorrichtung (22) auf das Gitter (4), um die gewünschte Schmelzviskosität der halbgeschmolzenen Fasern (50) zu regeln und aufrechtzuerhalten.

8. Ein Verfahren nach Anspruch 1, wobei der Stapel der halbgeschmolzenen Fasern (50) mehrere erste halbgeschmolzene Fasern (501) und mehrere zweite halbgeschmolzene Fasern (502) umfasst, wobei die ersten halbgeschmolzenen Fasern (501) durch das Schmelzen der ersten Harzpellets (211) zur Bildung einer ersten Schmelze gebildet werden, gefolgt von der Zuführung der ersten Schmelze durch die Spinndüse (221), die zweiten halbgeschmolzenen Fasern (502) durch das Schmelzen von zweiten Harzpellets (211) zur Bildung einer zweiten Schmelze gebildet werden, gefolgt von der Zuführung der zweiten 5 Schmelze durch das Schmelzblas-Formwerkzeug (222).

9. Ein Verfahren nach Anspruch 1, ferner umfassend einen Erhitzer (23) zur Erhitzung der halbgeschmolzenen Fasern (50).

## Revendications

1. Une méthode de fabrication d'un non tissé gaufré double face, comprenant :
la fusion de granulés de résine (211, 212) pour former une masse fondue, suivie par le passage de la masse fondue dans un dispositif de formation des fibres (22) pour former les fibres semi-fondues (50) et par l'évacuation subséquente des fibres semi-fondues (50) entre le dispositif de formation des fibres (22) et l'ensemble de tamis (4) ;
la formation d'un empilage de fibres semi-fondues (50) sur un ensemble de tamis (4), sur un dispositif d'aspiration (6), l'ensemble de tamis (4) comportant une première structure de couche (41) qui présente une pluralité d'orifices d'aspiration (411) organisés en en premier dessin, et une deuxième structure de couche (42) qui est disposée sur la première structure de couche (41) et qui présente une pluralité d'éléments (421) organisés en un deuxième dessin ; et
le gaufrage de l'empilage des fibres semi-fondues (50) sur l'ensemble de tamis (4) par aspiration de l'empilage des fibres semi-fondues (50), par utilisation du dispositif d'aspiration (6), de sorte que l'empilage des fibres semi-fondues (50) soit étiré dans les orifices d'aspiration (411) pour envelopper les éléments (421), en transformant ainsi l'empilage des fibres semi-fondues (50) en un non tissé (7) avec un dessin en relief correspondant au deuxième dessin de l'ensemble de tamis (4) et un dessin en creux correspondant au premier dessin de l'ensemble de tamis (4).

2. La méthode de la Revendication 1, où la formation de l'empilage des fibres semi-fondues (50) sur l'ensemble de tamis (4) est réalisée par empilage direct des fibres semi-fondues (50) sur l'ensemble de tamis (4).

3. La méthode de la Revendication 1, où la première structure de couche (41) présente un corps de paroi de tamis (410), les orifices d'aspiration (411) étant formés dans le corps de paroi de tamis (410), les éléments (421) ayant la forme de saillies isolées disposées sur le corps de paroi de tamis (410).

4. La méthode de la Revendication 1, où la première structure de couche (41) présente un corps de paroi de tamis (410), les orifices d'aspiration (411) étant formés dans le corps de paroi de tamis (410), les éléments (421) ayant la forme de nervures allongées qui sont formées en un corps de filet (420).

5. La méthode de la Revendication 1, où le dispositif de formation des fibres (22) est une filière (221).

6. La méthode de la Revendication 1, où le dispositif de formation des fibres (22) est une filière d'extrusion-soufflage (222).

7. La méthode de la Revendication 1, comprenant par ailleurs le réchauffage des fibres semi-fondues (50) au cours de l'évacuation des fibres semi-fondues (50) entre le dispositif de formation des fibres (22) et l'ensemble de tamis (4) de façon à contrôler et maintenir la viscosité de masse fondue souhaitée des fibres semi-fondues (50).

8. La méthode de la Revendication 1, où l'empilage des fibres semi-fondues (50) comporte une pluralité de premières fibres semi-fondues (501) et une pluralité de deuxièmes fibres semi-fondues (502), les premières fibres semi-fondues (501) étant formées par fusion de premiers granulés de résine (211) pour former une première masse fondue, suivi par le passage de la première masse fondue dans une filière (221), les deuxièmes fibres semi-fondues (502) étant formées par fusion de deuxièmes granulés de résine (212) pour former une deuxième masse fondue, suivi par le passage de la deuxième masse fondue 5 dans une filière d'extrusion-soufflage (222).

9. La méthode de la Revendication 1, comprenant par ailleurs un réchauffeur (23) pour réchauffer les fibres semi-fondues (50).
